(19) Europäisches Patentamt
European Patent Office
Office européen des brevets

(11)  EP 2 909 946 B1

(12)  **FASCICULE DE BREVET EUROPEEN**

(45) Date de publication et mention
de la délivrance du brevet:
**24.08.2016  Bulletin 2016/34**

(21) Numéro de dépôt: **13776466.8**

(22) Date de dépôt: **10.10.2013**

(51) Int Cl.:
**H04B 1/69** *(2006.01)*    **H04B 1/7183** *(2011.01)*

(86) Numéro de dépôt international:
**PCT/EP2013/071131**

(87) Numéro de publication internationale:
**WO 2014/060280 (24.04.2014 Gazette 2014/17)**

(54)  **RECEPTEUR UWB MULTI-CANAL RECONFIGURABLE**

UMKONFIGURIERBARER UWB-MEHRKANALEMPFÄNGER

RECONFIGURABLE UWB MULTI CHANEL RECEIVER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.10.2012  FR 1259863**

(43) Date de publication de la demande:
**26.08.2015  Bulletin 2015/35**

(73) Titulaires:
• **Commissariat à l'Énergie Atomique
et aux Énergies Alternatives
75015 Paris (FR)**
• **Be Spoon
73370 Le Bourget du Lac (FR)**

(72) Inventeurs:
• **OUVRY, Laurent
F-38000 Grenoble (FR)**
• **DEHMAS, François
F-38450 Vif (FR)**
• **HAMEAU, Frédéric
F-38250 Saint Nizier Du Moucherotte (FR)**
• **MASSON, Gilles
38430 Saint-Jean De Moirans (FR)**

(74) Mandataire: **Brevalex
95, rue d'Amsterdam
75378 Paris Cedex 8 (FR)**

(56) Documents cités:
**US-A1- 2007 155 348    US-A1- 2011 189 970**

• **FARID BAUTISTA ET AL: "Low power
beamforming RF architecture enabling fine
ranging and AOA techniques",
ULTRA-WIDEBAND (ICUWB), 2011 IEEE
INTERNATIONAL CONFERENCE ON, IEEE, 14
septembre 2011 (2011-09-14), pages 585-589,
XP031961234, DOI:
10.1109/ICUWB.2011.6058914 ISBN:
978-1-4577-1763-5**
• **CHOU C-Y ET AL: "A 5-GHz CMOS
Double-Quadrature Receiver Front-End With
Single-Stage Quadrature Generator", IEEE
JOURNAL OF SOLID-STATE CIRCUITS, IEEE
SERVICE CENTER, PISCATAWAY, NJ, USA, vol.
39, no. 3, 1 mars 2004 (2004-03-01), pages
519-521, XP011108382, ISSN: 0018-9200, DOI:
10.1109/JSSC.2003.822779**

EP 2 909 946 B1

**Description**

**DOMAINE TECHNIQUE**

La présente invention concerne le domaine des récepteurs UWB (*Ultra Wide Band*) et plus particulièrement ceux pouvant fonctionner dans plusieurs canaux fréquentiels.

**ÉTAT DE LA TECHNIQUE ANTÉRIEURE**

Les systèmes de télécommunication ultra-large bande (UWB), qu'ils soient de type impulsionnel ou non doivent émettre dans certaines bandes de fréquences, bien déterminées, fonction des réglementations régionales, et avec un spectre fréquentiel de largeur minimale (500 MHz aux Etats-Unis).

L'absence d'harmonisation des réglementations au niveau international d'une part et la multiplication des standards UWB pour différents types d'application, d'autre part, conduisent à prévoir des récepteurs capables d'opérer dans plusieurs bandes de fréquence.

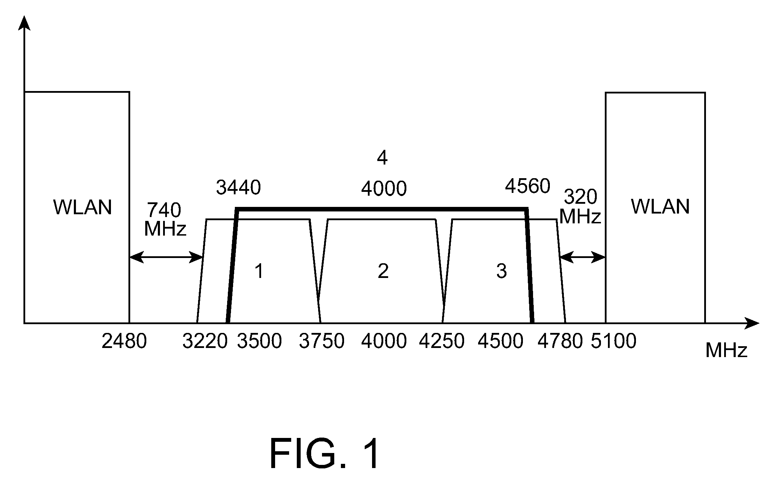

La Fig. 1 donne à titre d'exemple le plan de fréquence utilisé dans les standards IEEE 802.15.4a et IEEE 802.15.16, dans la bande 3-5 GHz. Le même plan de fréquence se retrouve d'ailleurs, simplement décalé, dans la bande 7-9 GHz. On rappelle que les standards IEEE 802.15.4a et IEEE 802.15.16 utilisent tous deux une transmission UWB impulsionnelle, le standard IEEE 802.15.4a étant relatif à la transmission UWB à bas débit ou LDR (*Low Data Rate*) pour des applications de localisation et le standard IEEE 802.15.6 concernant les réseaux corporels sans fil ou BAN (*Body Area Network)* dont une composante met en oeuvre une transmission UWB.

On voit que le plan de fréquence comprend quatre canaux. Les canaux 1, 2, 3 font chacun 500 MHz de large et sont respectivement centrés sur 3.5, 4 et 4.5 GHz, soit avec un espacement d'environ 500 MHz. Le canal 4 est centré sur 4 GHz et fait environ 1 GHz de large. On comprend qu'il soit avantageux de disposer d'un seul et même récepteur UWB capable de commuter entre ces différentes bandes et largeurs de bande.

Un premier type de récepteur UWB, dit homodyne ou à conversion directe, est connu du document EP-A-1 482 648 et représenté en Fig. 2. Ce récepteur comprend un simple étage de mélange en quadrature 210 avec une fréquence sensiblement égale à la fréquence centrale du signal reçu pour ramener le signal utile en bande de base. Le signal en bande de base est ensuite filtré à l'aide de filtres passe-bas 220, pour éliminer les composantes parasites au double de la fréquence de mélange, avant d'être échantillonné et numérisé par les convertisseurs analogique-numérique 230. Ce récepteur UWB est bien entendu ici monocanal dans la mesure où la fréquence du mélange est fixe.

Un second type de récepteur UWB connu de l'état de la technique a été décrit dans la demande EP-A-1 580 901 et illustré en Fig. 3A. Comme le précédent, ce récepteur comprend un premier étage, 310, effectuant une translation en bande de base à l'aide d'un mélange en quadrature à la fréquence centrale du signal. Les signaux en phase et en quadrature sont respectivement notés $s_I, s_Q$. Il comporte en outre un second étage comprenant un premier mélangeur en quadrature 321, en sortie de la voie en phase du premier étage, et un second mélangeur en quadrature 322, en sortie de la voie en quadrature du premier étage. Les mélangeurs en quadrature 321 et 322 effectuent une projection des signaux $s_I, s_Q$, sur une base constituée de deux sinusoïdes orthogonales. Les signaux obtenus par projection, notés $s_{II}, s_Q$, pour la voie I et $s_{QI}, s_{QQ}$ pour la voie Q, sont intégrés à l'intérieur d'une fenêtre temporelle, dans les intégrateurs 330. Les sinusoïdes constituant la base de projection orthogonale ont une période égale à la largeur de cette fenêtre temporelle (encore dénommée fenêtre temporelle). Les signaux intégrés, notés $r_{II}, r_{IQ}, r_{QI}, r_{QQ}$, sont sommés quadratiquement en 335,340. La somme ainsi obtenue est ensuite comparée à une valeur de seuil en 350 pour déterminer si la fenêtre temporelle contient une impulsion UWB, ce qui permet de synchroniser la fenêtre sur cette impulsion. Ce récepteur UWB, ci-après dénommé récepteur à projection orthogonale, permet d'améliorer la détection du signal impulsionnel.

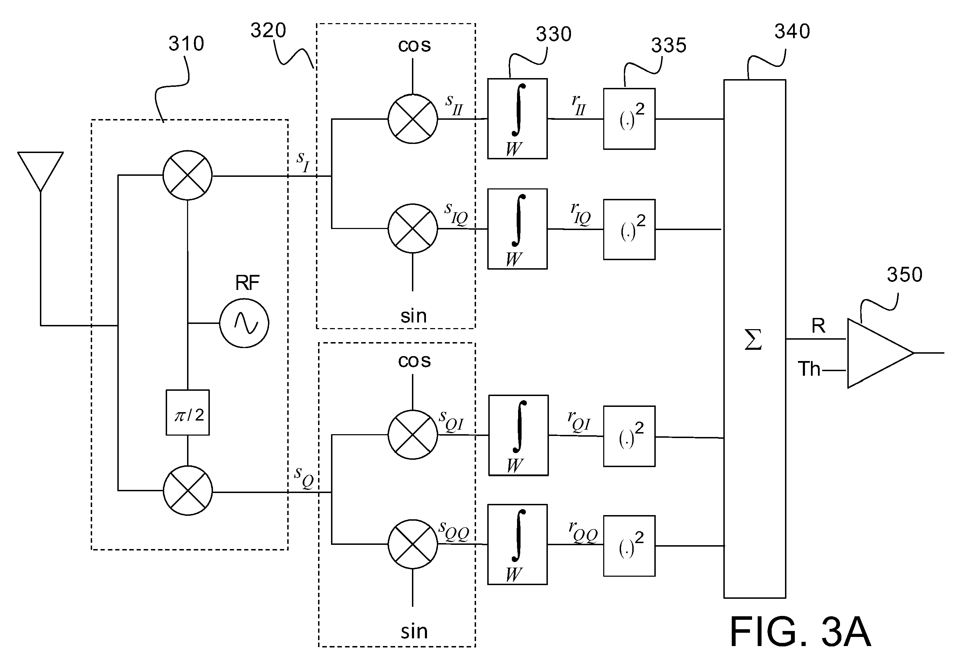

Une architecture de récepteur selon la Fig. 3A a été détaillée dans l'article de G. Masson *et al.* intitulé « A 1nJ/b 3.2 to 4.7 GHz UWB 50 Mpulses/s double quadrature receiver for communication and localization » publié dans Proc. of the ESSCIRC 2010, 14-16 Sept. 2010, Seville, Spain.

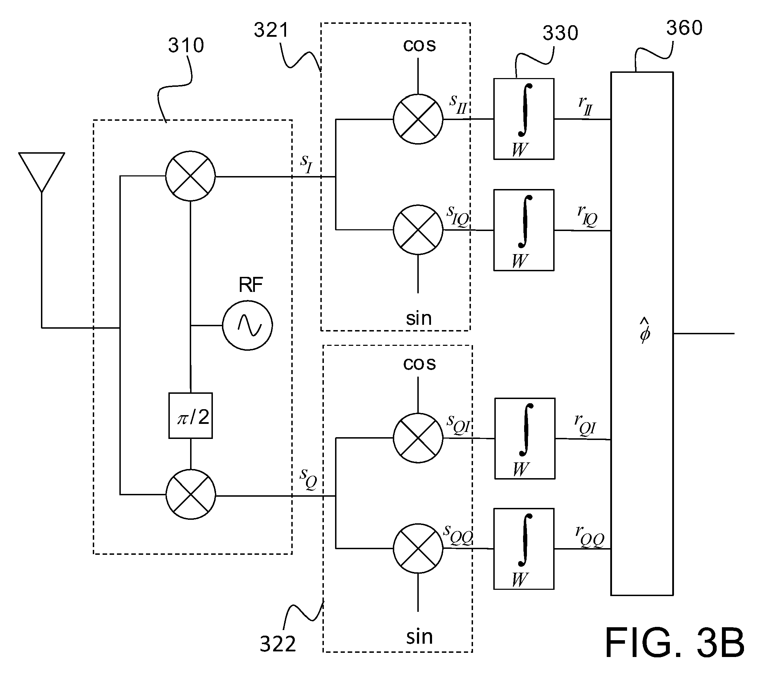

Le récepteur à projection orthogonale a fait l'objet d'un perfectionnement décrit dans la demande parallèle FR-1259861, déposée aux noms des présents Demandeurs, et illustré en Fig. 3B. Les éléments identiques à ceux de la Fig. 3A portent les mêmes signes de référence.

A la différence du récepteur de la Fig. 3A, la base de projection orthogonale présente ici une période égale au double de la largeur de la fenêtre temporelle d'intégration. Pour cette raison, ce récepteur sera désigné ci-après comme étant à projection sinusoïdale demi-période. Les signaux intégrés $r_{II}, r_{IQ}, r_{QI}, r_{QQ}$ sont fournis à un estimateur de phase 360 permettant de déterminer la position de l'impulsion UWB au sein de la fenêtre temporelle. Il est alors possible de corriger tout glissement de la fenêtre temporelle par rapport à l'impulsion UWB, d'une récurrence à l'autre.

Enfin, un récepteur multicanal UWB a été présenté dans la demande US-A-2007155348. Ce récepteur, spécifiquement adapté à la transmission MB-OFDM (*Multi Band OFDM*), c'est-à-dire à une transmission utilisant une modulation OFDM par canal avec un saut rapide d'un canal à l'autre (*frequency hopping*). Le nombre important de canaux utilisés pour la transmission et le temps très court de commutation nécessite une architecture complexe avec une pluralité de synthétiseurs de fréquence. L'architecture proposée comprend un premier étage de translation à une fréquence intermédiaire variable, un deuxième étage de mélange à fréquence variable à l'aide d'une banque de synthétiseurs de fréquence et enfin une cellule de Weaver reconfigurable pour éliminer les fréquences image. Toutefois, cette architecture est complexe et inadaptée à la réception d'un signal UWB impulsionnel dans un contexte basse consommation.

En outre, l'article de F. Bautista et al. intitulé « Low power beamforming RF architecture enabling fine ranging and AOA techniques » publié dans Proc. of IEEE Int'l Conférence on Ultra-Wideband (ICUWB), 14 Sept. 2011, pages 585-589, décrit une méthode de formation de faisceau pour une détermination fine du temps d'arrivée et de l'angle d'incidence d'une impulsion UWB. Chaque antenne élémentaire du formateur de faisceau RF est équipée d'un récepteur en double quadrature. Le premier étage de mélange en quadrature du récepteur ramène le signal reçu (fréquence RF à 4 GHz) en bande de base et le second étage effectue une projection des signaux en quadrature ainsi obtenus sur une base orthogonale constituée de deux sinusoïdes.

L'article de C-Y Wu et al. intitulé « A 5 GHz CMOS double-quadrature receiver front-end with single stage quadrature generator» publié dans IEEE Journal of Solid State Circuits, Vol. 39, No. 3, 1 Mars 2004, pages 519-521, concerne un récepteur à double quadrature pour signal OFDM.

La demande de brevet US-A-2011/189970 décrit un étage (de Weaver ou de Hartley) de suppression de fréquences images dans un récepteur superhétérodyne.

Le but de la présente invention est de proposer une architecture de récepteur UWB impulsionnel qui puisse adopter une grande variété de configurations, en particulier, qui permette de sélectionner le canal à recevoir, effectuer ou non une projection sur une base orthogonale, comme expliqué en relation avec la Fig. 3A ou, le cas échéant, sur une base sinusoïdale demi-période, comme expliqué en relation avec la Fig. 3B.

## EXPOSÉ DE L'INVENTION

La présente invention est définie par un récepteur de signal UWB impulsionnel dans un canal de réception parmi une pluralité de canaux distribués autour d'une fréquence centrale, le récepteur comportant :

- un premier étage, comprenant un premier mélangeur en quadrature opérant à une première fréquence, destiné à translater ledit signal, en bande de base ou à une fréquence intermédiaire, le premier étage fournissant une voie en phase et une voie en quadrature ;
- un second étage, comprenant un second mélangeur en quadrature sur ladite voie en phase et un second mélangeur en quadrature sur ladite voie en quadrature, le second mélangeur opérant à une seconde fréquence et fournissant un premier signal en phase et un second signal en quadrature, le troisième mélangeur opérant à ladite seconde fréquence et fournissant un second signal en phase et un second signal en quadrature ;
- un troisième étage intégrant lesdits premiers signaux en phase et en quadrature, ainsi que lesdits seconds signaux en phase et en quadrature, sur une fenêtre temporelle, pour fournir respectivement des premier, second, troisième et quatrième résultats d'intégration ;

le récepteur comportant en outre un quatrième étage combinant les premier, second, troisième et quatrième résultats d'intégration au moyen de coefficients de combinaison pour fournir au moins une partie réelle et une partie imaginaire d'un symbole de modulation ; et que :

- la première fréquence est égale à la fréquence centrale ;
- la seconde fréquence et les coefficients de combinaison sont contrôlables en fonction du canal de réception.

Avantageusement, le premier étage comprend un premier filtre sur la voie en phase et un second filtre sur la voie en quadrature, de caractéristiques identiques, contrôlables en fonction du canal de réception.

Si le canal de réception est centré sur la fréquence centrale, les caractéristiques des premier et second filtres peuvent être contrôlées de sorte à ce qu'ils soient configurés en filtres passe-bas.

Alternativement, si le canal de réception est décalé d'un offset par rapport à la fréquence centrale, les caractéristiques des premier et second filtres sont contrôlées de sorte à ce qu'ils soient configurés en filtres passe-bande.

Avantageusement, la seconde fréquence est choisie égale à l'offset de fréquence.

Selon une configuration de fonctionnement, les coefficients de combinaison sont choisis de sorte à effectuer une réjection de la fréquence image du canal de réception par rapport à la fréquence centrale.

Selon une autre configuration de fonctionnement, le second étage opère en mode transparent.

Le mode transparent peut être obtenu en shuntant les second et troisième mélangeurs au moyen de commutateurs montés en dérivation sur ces derniers.

Alternativement, le mode transparent est obtenu en choisissant la seconde fréquence égale à zéro.

Selon une autre configuration de fonctionnement, le canal de réception est centré sur la fréquence centrale et le second étage est configuré en mode transparent.

Dans ce cas, selon une première variante, le quatrième étage effectue une sélection entre les premier et second résultats d'intégration pour fournir la partie réelle du symbole de modulation, et une sélection entre les troisième et quatrième résultats d'intégration pour fournir la partie imaginaire du symbole de modulation.

Selon une seconde variante, le quatrième étage effectue une moyenne entre les premier et second résultats d'intégration pour fournir la partie réelle du symbole de modulation, et une moyenne entre les troisième et quatrième résultats d'intégration pour fournir la partie imaginaire du symbole de modulation.

Selon encore une autre configuration de fonctionnement, le canal de réception est centré sur la fréquence centrale et la largeur de la fenêtre temporelle est égale à une période de la seconde fréquence.

Selon encore une autre configuration de fonctionnement, le canal de réception est centré sur la fréquence centrale et la largeur de la fenêtre temporelle est égale à une demi-période de la seconde fréquence.

Selon une première variante, le quatrième étage effectue une somme des premier et quatrième résultats d'intégration pour fournir la partie réelle du symbole de modulation, et il effectue la différence des second et troisième résultats d'intégration pour fournir la partie imaginaire du symbole de modulation.

Selon une seconde variante, le quatrième étage est configurable en mode transparent.

Dans toutes les configurations précitées, la première fréquence, la seconde fréquence et la fréquence de récurrence de la fenêtre temporelle sont avantageusement fournies par un synthétiseur de fréquences.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1, déjà décrite, représente un exemple de plan de fréquence dans une bande spectrale UWB;

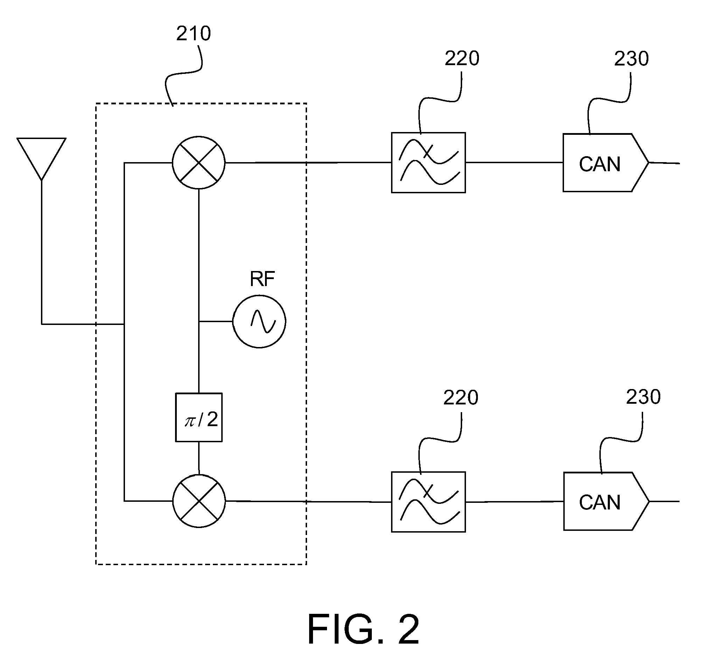

La Fig. 2, déjà décrite, représente de manière schématique un premier exemple de récepteur UWB connu de l'état de la technique;
La Fig. 3A, déjà décrite, représente de manière schématique un second exemple de récepteur UWB de type impulsionnel, connu de l'état de la technique;
La Fig. 3B, déjà décrite représente de manière schématique un perfectionnement du récepteur UWB de la Fig. 3A;
La Fig. 4 représente l'architecture d'un récepteur UWB selon un mode de réalisation de l'invention ;
La Fig. 4A représente le récepteur UWB de la Fig. 4 dans une première configuration de fonctionnement ;
La Fig. 4B représente le récepteur UWB de la Fig. 4 dans une seconde configuration de fonctionnement ;
La Fig. 4C représente le récepteur UWB de la Fig. 4 dans une troisième configuration de fonctionnement ;
La Fig. 4D représente le récepteur UWB de la Fig. 4 dans une quatrième configuration de fonctionnement ;
La Fig. 4E représente le récepteur UWB de la Fig. 4 dans une cinquième configuration de fonctionnement ;
La Fig. 4F représente le récepteur UWB de la Fig. 4 dans une sixième configuration de fonctionnement ;
La Fig. 4G représente le récepteur UWB de la Fig. 4 dans une septième configuration de fonctionnement ;
La Fig. 4H représente le récepteur UWB de la Fig. 4 dans une huitième configuration de fonctionnement.

## EXPOSÉ DÉTAILLÉ DE MODES DE RÉALISATION PARTICULIERS

On considérera dans la suite un récepteur destiné à recevoir un signal impulsionnel pouvant être émis dans différentes bandes possibles d'un plan de fréquence. On rappelle qu'un signal UWB impulsionnel est constitué d'impulsions ultracourtes (de l'ordre de la nanoseconde ou de la centaine de picosecondes) se répétant avec une période de récurrence, un symbole d'information étant transmis au moyen d'une modulation en phase, en amplitude et/ou en position d'une ou pluralité d'impulsions successives.

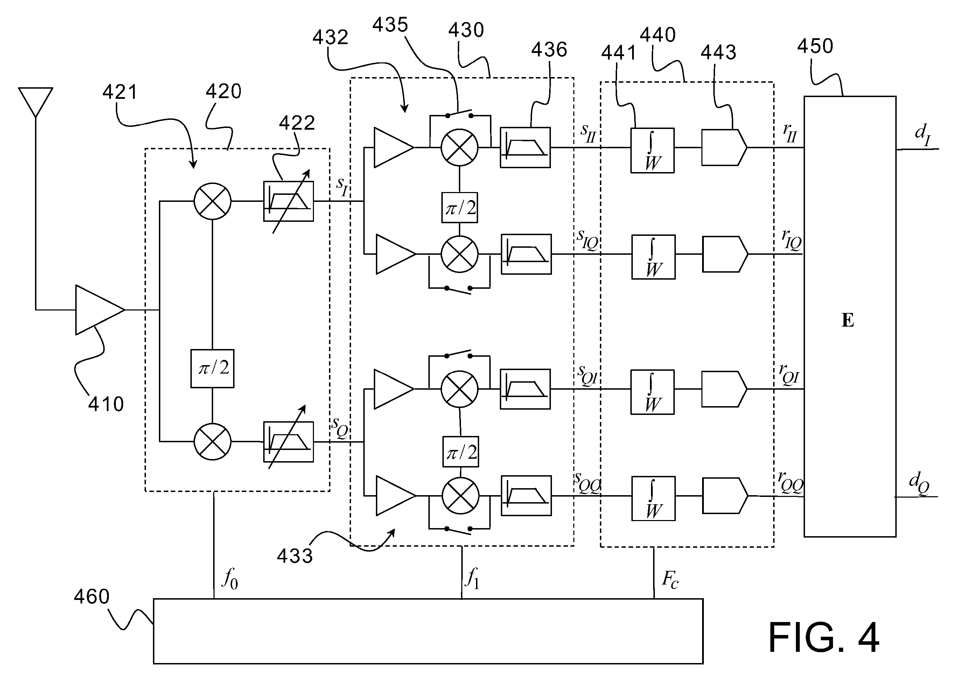

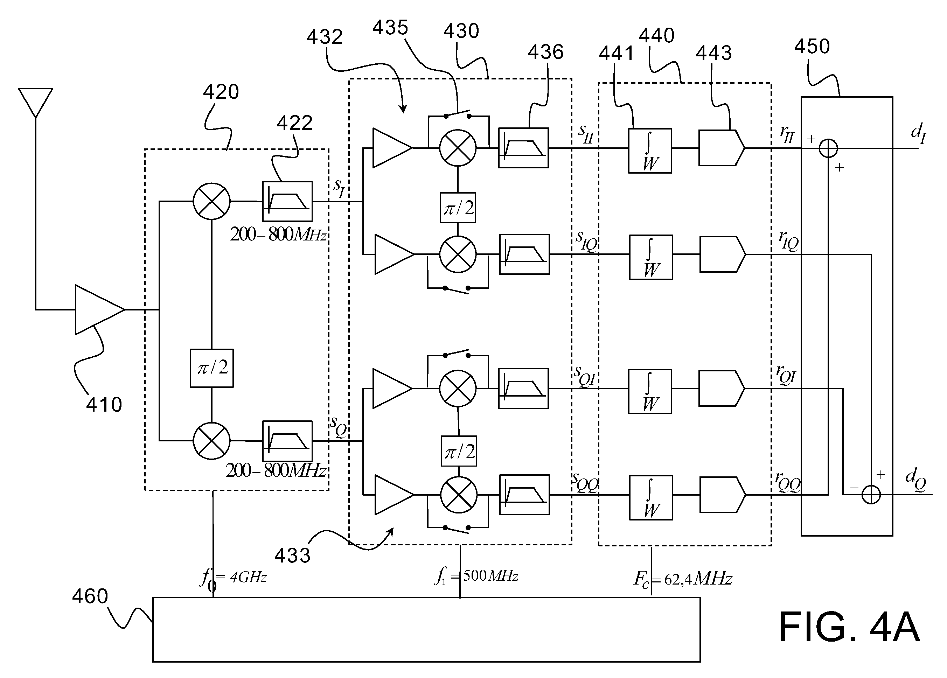

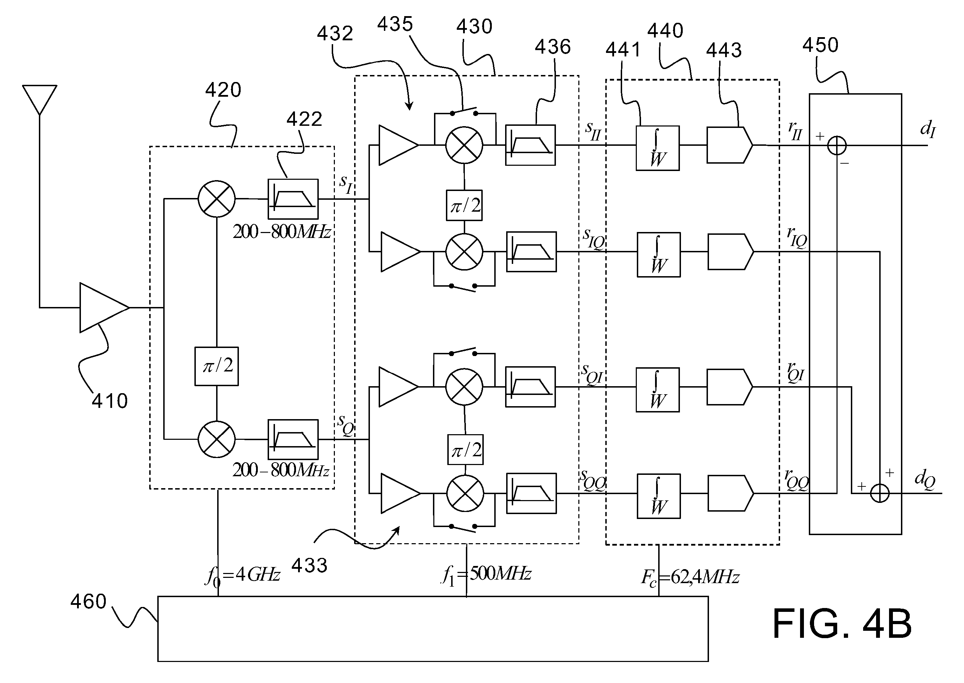

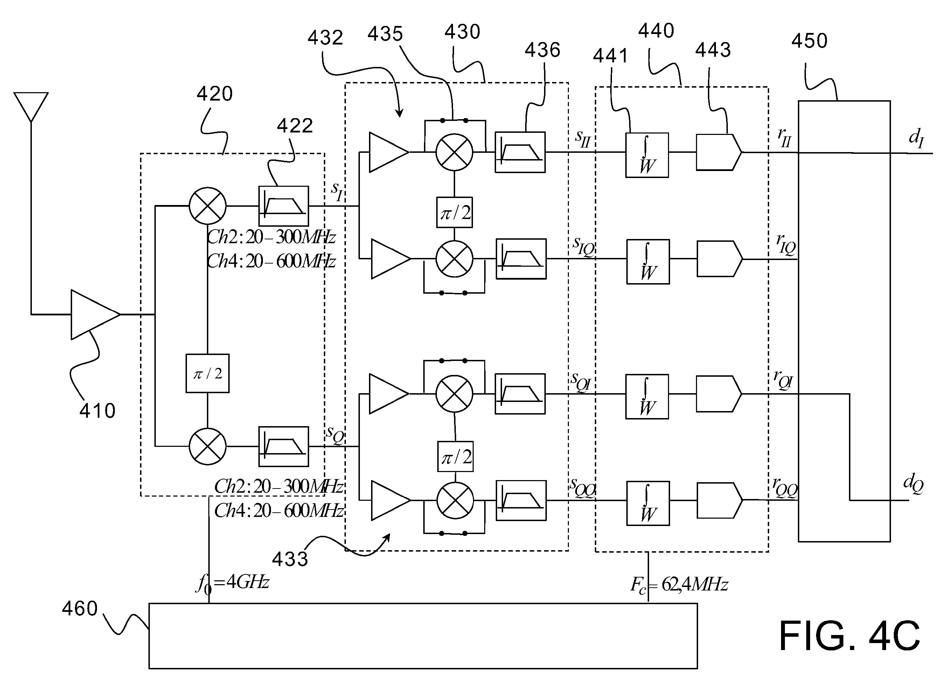

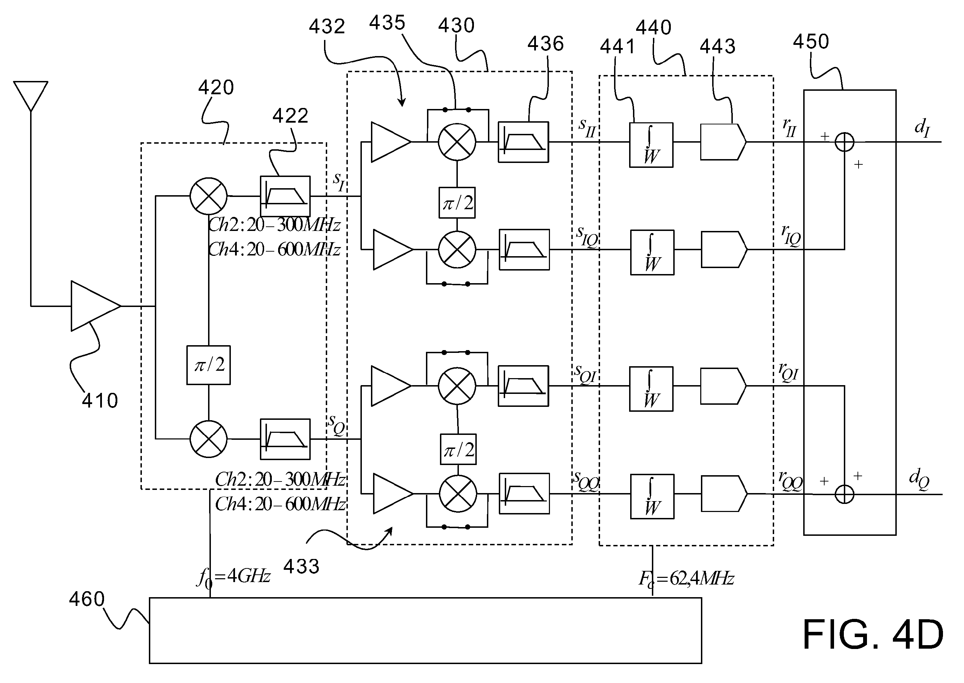

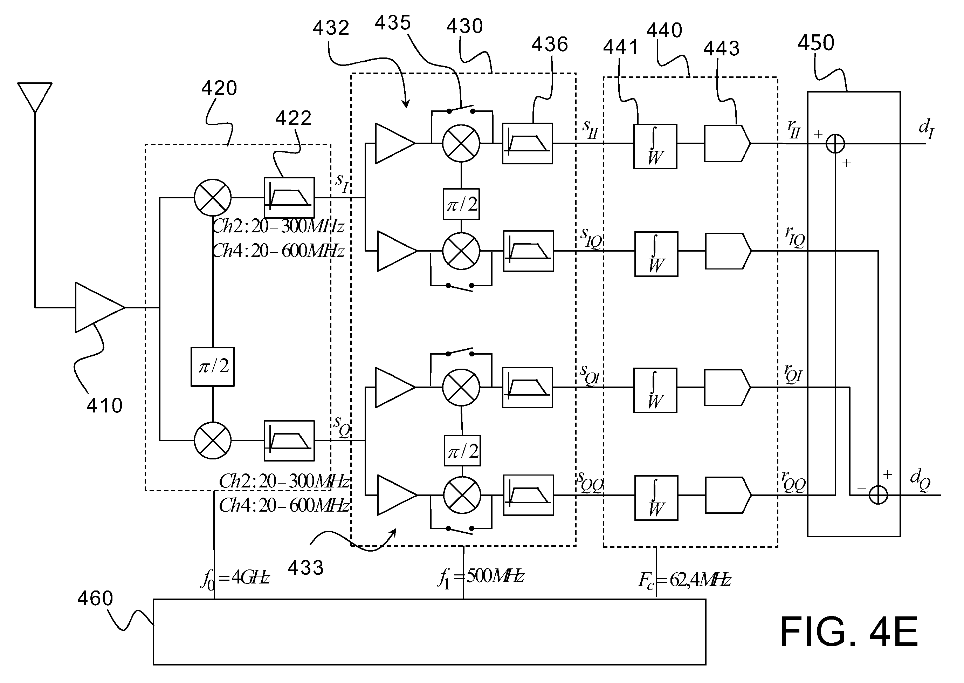

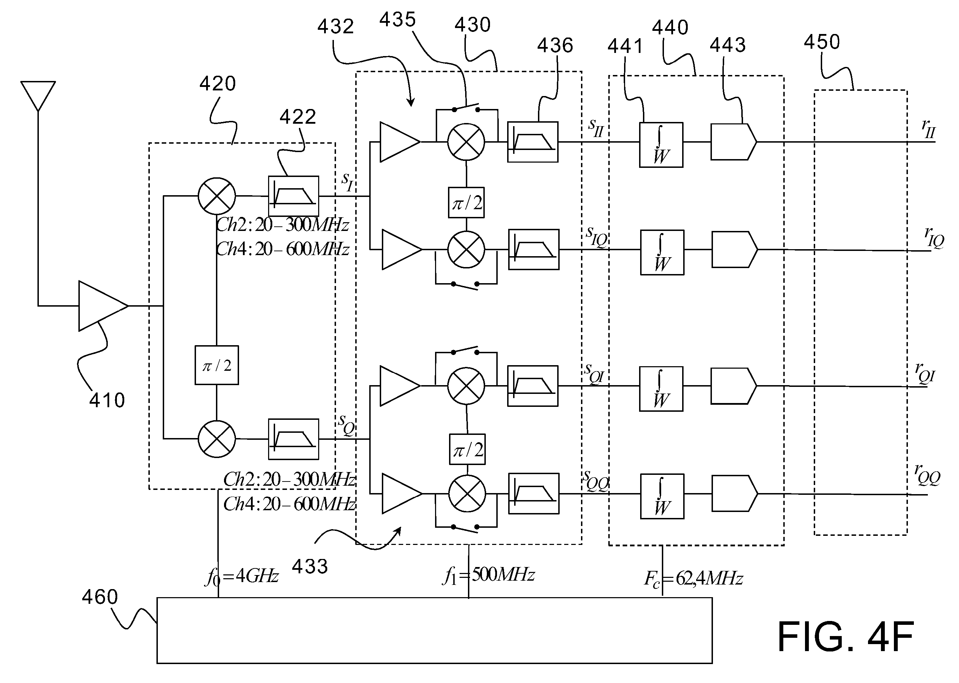

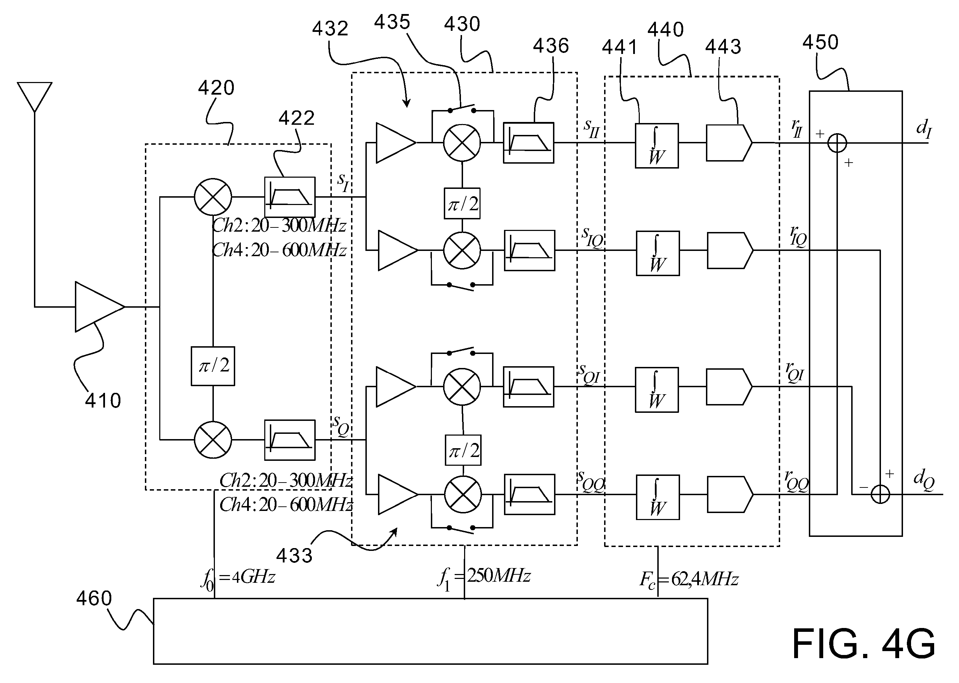

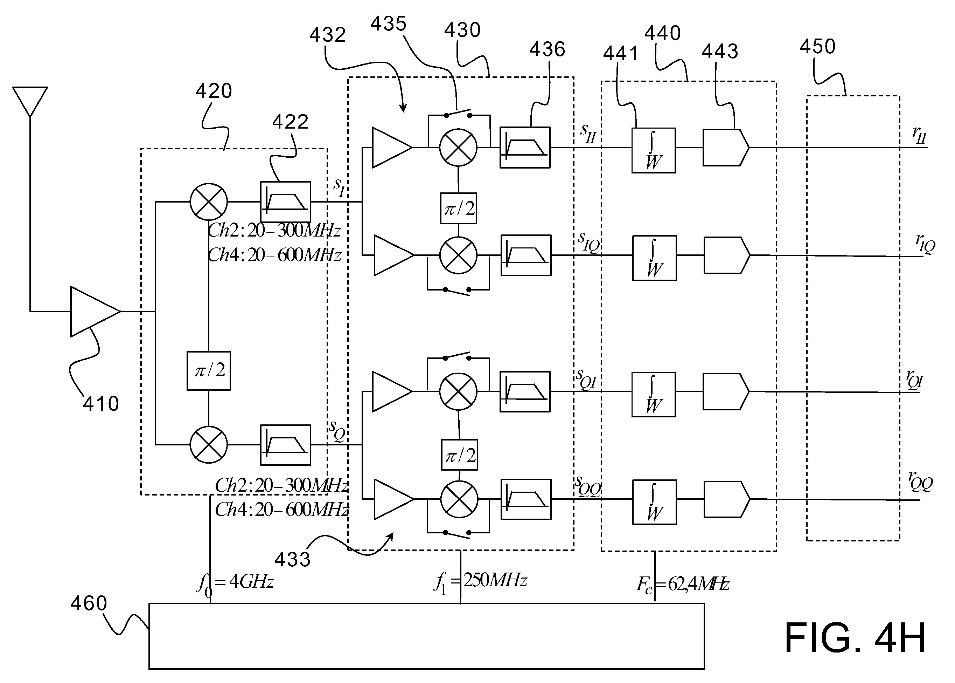

La Fig. 4 représente de manière schématique un récepteur UWB selon un mode de réalisation de l'invention et plus précisément son étage d'entrée analogique avant la démodulation numérique.

Le récepteur UWB comprend en entrée un amplificateur bas bruit (LNA), 410. Avantageusement, la bande passante du LNA couvre tous les canaux du plan de fréquence. Alternativement, le LNA est plus sélectif et sa bande passante est centrée sur le canal désiré. Enfin, on peut prévoir un amplificateur bas bruit dont la bande passante peut être contrôlée pour sélectionner le canal d'intérêt.

L'amplificateur bas bruit est suivi d'un premier étage de translation de fréquence, 420. Nous verrons dans la suite que cet étage, permet, selon la configuration, de ramener le signal reçu en bande de base ou de le décaler à une fréquence intermédiaire déterminée. Ce premier étage comprend de manière classique un premier mélangeur en quadrature, 421. La fréquence, $f_0$, utilisée pour le mélange est la fréquence centrale du plan de fréquence, autrement dit la fréquence de symétrie de la distribution des différents canaux. Elle est fournie par le synthétiseur de fréquence 460, réalisé par exemple, de manière connue en soi, à partir d'un oscillateur contrôlé en fréquence asservi par une boucle à verrouillage de phase.

Les signaux en phase et en quadrature en sortie du mélangeur en quadrature, $s_I, s_Q$ sont respectivement filtrés au moyen des filtres 423 et 424. Ces filtres présentent des fréquences de coupure basse et haute contrôlables. Selon la configuration envisagée, ils peuvent effectuer un filtrage passe-bas ou un filtrage passe-bande. Ils peuvent être avantageusement réalisés sous la forme de filtres gm-C de type bi-quad. Dans un tel filtre la bande passante peut être modifiée en faisant varier sa tension de contrôle. Un exemple de filtre gm-C est décrit dans l'article de B. Nauta intitulé « A CMOS transconductance-C filter technique for very high frequencies », IEEE Journal of Solid States Circuits, vol. 27, No 2, Feb. 1992.

Les signaux $s_I, s_Q$ ainsi filtrés passent dans un second étage, 430, comprenant un second mélangeur en quadrature 432, sur la voie en phase, et un troisième mélangeur en quadrature, 433, sur la voie en quadrature. La fréquence, $f_1$, utilisée par les second et troisième mélangeurs est fournie par le synthétiseur de fréquence 460.

Le signal en phase, $s_I$, peut être amplifié avant d'être mélangé par le second mélangeur, 432. Les sorties en phase et en quadrature de ce mélangeur sont notées respectivement $s_{II}, s_{IQ}$. Elles sont avantageusement filtrées par des filtres passe-bas, 436, dont la fréquence de coupure peut être contrôlable. De manière similaire, le signal en quadrature, $s_Q$, peut être amplifié avant d'être mélangé par le troisième mélangeur 433. Les sorties en phase et en quadrature de ce mélangeur sont notées respectivement $S_{QI}, S_{QQ}$. Le second étage, 430, peut être shunté selon la configuration adoptée par le récepteur par les commutateurs 435. Alternativement, le second étage 430 est shunté en choisissant simplement la fréquence $f_1$ égale à 0.

Les signaux en sortie du second étage, qui peut être éventuellement shunté comme expliqué plus haut, sont intégrés (et numérisés) par un étage 40. Plus précisément, ces signaux sont intégrés dans une fenêtre temporelle par les intégrateurs 441. La fréquence de récurrence, $F_c$, de la fenêtre d'intégration est fournie par le synthétiseur de fréquence 460. Les résultats d'intégration sur les différentes voies, $r_{II}, r_{IQ}, r_{QI}, r_{QQ}$, sont numérisés grâce aux convertisseurs analogique/numérique 443.

Les résultats d'intégration sont ensuite combinés dans un étage de combinaison, 450. Cet étage effectue une opération de combinaison qui peut être représentée de façon matricielle par :

$$\begin{pmatrix} d_I \\ d_Q \end{pmatrix} = \begin{pmatrix} \varepsilon_{II}^I & \varepsilon_{IQ}^I & \varepsilon_{QI}^I & \varepsilon_{QQ}^I \\ \varepsilon_{II}^Q & \varepsilon_{IQ}^Q & \varepsilon_{QI}^Q & \varepsilon_{QQ}^Q \end{pmatrix} \begin{pmatrix} r_{II} \\ r_{IQ} \\ r_{QI} \\ r_{QQ} \end{pmatrix} \qquad (1)$$

où $d_I$ et $d_Q$ sont respectivement la partie réelle et la partie imaginaire d'un symbole (complexe) de modulation d, et les éléments de la matrice appartiennent à l'ensemble {-1,0,+1}. La matrice $\mathbb{E} = \begin{pmatrix} \varepsilon_{II}^I & \varepsilon_{IQ}^I & \varepsilon_{QI}^I & \varepsilon_{QQ}^I \\ \varepsilon_{II}^Q & \varepsilon_{IQ}^Q & \varepsilon_{QI}^Q & \varepsilon_{QQ}^Q \end{pmatrix}$ dépend de la

configuration du récepteur.

Le symbole de modulation peut ensuite faire l'objet d'une démodulation numérique de manière connue en soi.

A titre d'exemple et sans préjudice de généralité, nous supposerons dans la suite que le récepteur est destiné à recevoir un signal UWB impulsionnel dans les canaux 1 à 4 du plan de fréquence de la Fig. 1.

La Fig. 4A représente une première configuration du récepteur UWB.

Dans cette configuration, le récepteur reçoit le canal 1 (centré sur 3.5 GHz). Pour ce faire, le premier mélangeur en quadrature 421 du premier étage 420 opère à la fréquence $f_0$=4 GHz et les second et troisième mélangeurs, 431, 432, du second étage 430, opèrent à la fréquence $f_1$=500 MHz.

Ainsi le premier étage 420 translate la bande d'intérêt à la fréquence intermédiaire de 500 MHz. Les filtres 421 et 422 sont configurés en filtres passe-bande centrés autour de cette fréquence. Par exemple, la bande passante de ces filtres pourra être choisie comme étant 200-800 MHz. Le second étage 430 ramène le signal d'intérêt en bande de base. La combinaison des premier et second étages permet donc au récepteur de fonctionner en mode hétérodyne.

Les signaux $s_{II}, s_{IQ}$ et $s_{QI}, s_{QQ}$ sont intégrés dans la fenêtre temporelle (se répétant ici avec une fréquence de 62.4 MHz) au sein de l'étage d'intégration 440.

L'étage de combinaison 450 est configuré comme une cellule de Weaver. Une telle cellule permet la réjection de la fréquence image du signal (fréquence symétrique de la fréquence centrale du signal, soit 3.5 GHz, par rapport à la fréquence du premier mélange, soit 4 GHz). Les coefficients de la matrice de combinaison dépendent de la phase de l'oscillateur local à la fréquence $f_0$ et celle de l'oscillateur local à la fréquence $f_1$. Par exemple, si les voies en phase reçoivent un signal en cos et les voies en quadrature un signal en sin, la matrice de combinaison aura la forme suivante :

$$\mathbf{E} = \begin{pmatrix} 1 & 0 & 0 & 1 \\ 0 & 1 & -1 & 0 \end{pmatrix} \qquad (2)$$

En revanche, par exemple, si la voie en phase du premier étage reçoit un signal en sin alors que sa voie en quadrature reçoit un signal en cos, on a, avec les mêmes phases que précédemment pour le second étage :

$$\mathbf{E} = \begin{pmatrix} 0 & 1 & 1 & 0 \\ -1 & 0 & 0 & 1 \end{pmatrix} \qquad (2')$$

L'homme du métier comprendra que la matrice de combinaison pourra prendre d'autres formes selon les phases des oscillateurs locaux aux fréquences $f_0$ et $f_1$. Ces formes se déduisent de (2) par des permutations de colonnes.

La Fig. 4B représente une seconde configuration du récepteur UWB.

Dans cette configuration, le récepteur reçoit le canal 3 (centré sur 4.5 GHz). Pour ce faire, le premier mélangeur en quadrature 421 du premier étage 420 opère à la fréquence $f_0$=4 GHz et les second et troisième mélangeurs, 431, 432, du second étage 430, opèrent à la fréquence $f_1$=500 Mhz.

Ainsi le premier étage 420 translate la bande d'intérêt à la fréquence intermédiaire de 500 MHz. Les filtres 421 et 422 sont configurés en filtres passe-bande centrés autour de cette fréquence. Par exemple, la bande passante de ces filtres pourra être choisie comme étant 200-800 MHz. Le second étage 430 ramène le signal d'intérêt en bande de base. Comme dans la configuration précédente, la combinaison des premier et second étages permet au récepteur de fonctionner en mode hétérodyne.

Les signaux $s_{II}, s_{IQ}$ et $s_{QI}, s_{QQ}$ sont intégrés dans la fenêtre temporelle (se répétant ici avec une fréquence de 62.4 MHz) au sein de l'étage d'intégration 440.

L'étage de combinaison 450 est à nouveau configuré comme une cellule de Weaver. Les coefficients de la matrice de combinaison dépendent de la phase de l'oscillateur local à la fréquence $f_0$ et de celle de l'oscillateur local à la fréquence $f_1$. Si les voies en phase reçoivent un signal en cos et les voies en quadrature un signal en sin, la matrice de combinaison aura la forme suivante:

$$\mathbf{E} = \begin{pmatrix} 1 & 0 & 0 & -1 \\ 0 & 1 & 1 & 0 \end{pmatrix} \qquad (3)$$

En revanche, par exemple, si la voie en phase du premier étage reçoit un signal en sin alors que sa voie en quadrature reçoit un signal en cos, on a, avec les mêmes phases que précédemment pour le second étage :

$$\mathbf{E} = \begin{pmatrix} 0 & -1 & 1 & 0 \\ 1 & 0 & 0 & 1 \end{pmatrix} \qquad (3')$$

La matrice de combinaison pourra prendre d'autres formes selon les phases des oscillateurs locaux aux fréquences $f_0$ et $f_1$. Ces formes se déduisent de (3) par des permutations de colonnes.

La Fig. 4C représente une troisième configuration du récepteur UWB.

Dans cette configuration, le récepteur reçoit le canal 2 ou 4 (centré sur 4 GHz) sans effectuer de projection orthogonale. Pour ce faire, le premier mélangeur en quadrature 421 du premier étage 420 opère à la fréquence $f_0$=4 GHz et le second étage 430 est shunté. Le récepteur fonctionne ainsi en mode homodyne.

Le premier étage 420 ramène le signal d'intérêt en bande de base. Les filtres 421 et 422 sont configurés en filtres passe-bas avec, par exemple, une fréquence de coupure à 300 MHz pour le canal 2 et une fréquence de coupure à 600 MHz pour le canal 4.

Les signaux $s_{II}$ et $s_{QI'}$ sont intégrés dans la fenêtre temporelle (se répétant ici avec une fréquence de 62.4 MHz) au sein de l'étage d'intégration 440. Les signaux $s_{IQ}$ et $s_{QQ}$ n'ont pas besoin d'être intégrés et les voies correspondantes peuvent d'ailleurs être désactivées pour économiser l'énergie de la source d'alimentation.

L'étage de combinaison 450 est configuré pour sélectionner les voies actives, autrement dit :

$$\mathbf{E} = \begin{pmatrix} 1 & 0 & 0 & 0 \\ 0 & 0 & 1 & 0 \end{pmatrix} \qquad (4)$$

Bien entendu, si les signaux $s_{IQ}$ et $s_{QQ}$ avaient été intégrés et les voies correspondant aux signaux $s_{II}$ et $s_{QI}$ avaient été désactivées, la matrice de combinaison aurait eu la forme :

$$\mathbf{E} = \begin{pmatrix} 0 & 1 & 0 & 0 \\ 0 & 0 & 0 & 1 \end{pmatrix} \qquad (4')$$

La Fig. 4D représente une quatrième configuration du récepteur UWB.

Cette configuration permet de recevoir les canaux 2 et 4, sans projection orthogonale. Elle diffère de la Fig. 4C par le fait que toutes les voies sont ici actives. Les signaux $s_{II}$ et $s_{IQ}$ sont toutefois identiques puisque le second étage est shunté (fermeture des commutateurs 435 ou mélange à fréquence DC). De même, les signaux $S_{QI}$ et $s_{QQ}$ sont identiques. Les signaux $s_{II}$, $s_{IQ}$ et $s_{QI}$, $sQQ$ sont intégrés dans la fenêtre temporelle et les résultats d'intégration sont combinés par l'étage 450 au moyen de la matrice de combinaison :

$$\mathbf{E} = \begin{pmatrix} 1 & 1 & 0 & 0 \\ 0 & 0 & 1 & 1 \end{pmatrix} \qquad (5)$$

Cet étage effectue une moyenne des valeurs $r_{II}, r_{IQ}$, d'une part, et des valeurs $r_{QI}, r_{QQ}$, d'autre part, ce qui permet d'obtenir un meilleur rapport signal sur bruit.

La Fig. 4E représente une cinquième configuration du récepteur UWB.

Cette configuration permet de recevoir les canaux 2 et 4, et d'effectuer une projection sur une base orthogonale.

On peut ensuite déterminer si la fenêtre temporelle contient une impulsion UWB en commutant le récepteur sur une sixième configuration illustrée en Fig. 4F.

Dans ces cinquième et sixième configurations, comme dans les troisième et quatrième, le premier étage 420 effectue la translation du signal reçu en bande de base (conversion directe). La fréquence $f_0$ du premier étage est choisie égale à 4 GHz.

Les filtres 421 et 422 sont configurés en filtres passe-bas (fréquence de coupure à 300 MHz pour le canal 2 et fréquence de coupure à 600 MHz pour le canal 4).

Le second étage 430 effectue la projection de chacun des signaux $s_I$ et $s_Q$ sur une base orthogonale constituée de sinusoïdes en quadrature à la fréquence $f_1$=500 MHz.

Le troisième étage 440 effectue l'intégration des signaux $s_{II}, s_{IQ}$ et $s_{QI}, s_{QQ}$ dans la fenêtre temporelle. Celle-ci possède une largeur égale à une période de la fréquence de mélange, $f_1$, des sinusoïdes constituant la base de projection, soit ici 2 ns. La période de récurrence de la fenêtre temporelle est choisie par exemple égale à 62.4 MHz.

Dans la cinquième configuration, les résultats d'intégration dans la fenêtre, $r_{II}, r_{IQ}, r_{QI}, r_{QQ}$, sont combinés dans l'étage de combinaison 450 au moyen de la matrice de combinaison :

$$\mathbf{E} = \begin{pmatrix} 1 & 0 & 0 & 1 \\ 0 & 1 & -1 & 0 \end{pmatrix} \qquad (6)$$

Lorsque l'on souhaite déterminer si la fenêtre temporelle contient bien une impulsion, il suffit de basculer l'étage de combinaison en mode transparent comme illustré en Fig. 4F. Les résultats d'intégration peuvent alors être sommés quadratiquement :

$$R = r_{II}^2 + r_{IQ}^2 + r_{QI}^2 + r_{QQ}^2 \qquad (7)$$

et la somme quadratique est comparée à un seuil pour déterminer si une impulsion est bien présente dans la fenêtre.

La Fig. 4G représente une septième configuration du récepteur UWB.

Cette configuration permet de recevoir les canaux 2 et 4, et d'effectuer une projection sur une base orthogonale sinusoïdale demi-période.

On peut ensuite déterminer précisément la position de l'impulsion au sein de la fenêtre temporelle en commutant le récepteur sur une huitième configuration représentée en Fig. 4H.

Les septième et huitième configurations sont respectivement identiques aux cinquième et sixième, à la différence près que la fréquence des sinusoïdes utilisées comme base de projection orthogonale du second étage est de 250 MHz. De manière plus générale, dans ces deux dernières configurations, la largeur de la fenêtre temporelle est égale à une demi-période de la fréquence de mélange du second étage.

Ainsi, lorsque l'on souhaite déterminer la position temporelle de l'impulsion dans la fenêtre temporelle, il suffit de basculer l'étage de combinaison en mode transparent comme illustré en Fig. 4H et de calculer alors la phase :

$$\hat{\varphi}_I = \arctan\left(\frac{r_{IQ}}{r_{II}}\right) \qquad (8)$$

ou

$$\hat{\varphi}_Q = \arctan\left(\frac{r_{QQ}}{r_{QI}}\right) \qquad (9)$$

les phases $\hat{\varphi}_I$, et $\hat{\varphi}_Q$ permettant d'obtenir de manière non ambiguë la position temporelle de l'impulsion dans la fenêtre.

## Revendications

1. Récepteur de signal UWB impulsionnel dans un canal de réception parmi une pluralité de canaux distribués autour d'une fréquence centrale, le récepteur comportant :

   - un premier étage (420), comprenant un premier mélangeur en quadrature opérant à une première fréquence ($f_0$), égale à la fréquence centrale, destiné à translater ledit signal, en bande de base ou à une fréquence intermédiaire, le premier étage fournissant une voie en phase ($s_I$) et une voie en quadrature ($s_Q$);
   - un second étage (430), comprenant un second mélangeur en quadrature (432) sur ladite voie en phase et un troisième mélangeur en quadrature (433) sur ladite voie en quadrature, le second mélangeur opérant à une seconde fréquence ($f_1$) et fournissant un premier signal en phase et un premier signal en quadrature, le troisième mélangeur opérant à ladite seconde fréquence et fournissant un second signal en phase et un second signal en quadrature ;
   - un troisième étage (440) intégrant lesdits premiers signaux en phase et en quadrature, ainsi que lesdits seconds signaux en phase et en quadrature, sur une fenêtre temporelle, pour fournir respectivement des premier, second, troisième et quatrième résultats d'intégration ;

   **caractérisé en ce qu'**il comporte en outre un quatrième étage (450) combinant les premier, second, troisième et quatrième résultats d'intégration au moyens de coefficients de combinaison pour fournir au moins une partie réelle et une partie imaginaire d'un symbole de modulation ; et que :

   - la seconde fréquence et les coefficients de combinaison sont contrôlables en fonction du canal de réception.

2. Récepteur selon la revendication 1, **caractérisé en ce que** le premier étage comprend un premier filtre sur la voie en phase et un second filtre sur la voie en quadrature, de caractéristiques identiques, contrôlables en fonction du canal de réception.

8

**3.** Récepteur selon la revendication 2, **caractérisé en ce que** le canal de réception étant centré sur la fréquence centrale, les caractéristiques des premier et second filtres sont contrôlées de sorte à ce qu'ils soient configurés en filtres passe-bas.

**4.** Récepteur selon la revendication 2, **caractérisé en ce que** le canal de réception étant décalé d'un offset par rapport à la fréquence centrale, les caractéristiques des premier et second filtres sont contrôlées de sorte à ce qu'ils soient configurés en filtres passe-bande.

**5.** Récepteur selon la revendication 4, **caractérisé en ce que** la seconde fréquence est choisie égale à l'offset de fréquence.

**6.** Récepteur selon la revendication 5, **caractérisée en ce que** les coefficients de combinaison sont choisis de sorte à effectuer une réjection de la fréquence image du canal de réception par rapport à la fréquence centrale.

**7.** Récepteur selon la revendication 1, **caractérisé en ce que** le second étage est configurable pour pouvoir opérer en mode transparent.

**8.** Récepteur selon la revendication 7, **caractérisé en ce que** le mode transparent est obtenu en shuntant les second et troisième mélangeurs (432, 433) au moyen de commutateurs (435) montés en dérivation sur ces derniers.

**9.** Récepteur selon la revendication 7, **caractérisé en ce que** le mode transparent est obtenu en choisissant la seconde fréquence égale à zéro.

**10.** Récepteur selon la revendication 7, **caractérisé en ce que** le canal de réception est centré sur la fréquence centrale et que le second étage est configuré en mode transparent.

**11.** Récepteur selon la revendication 10, **caractérisé en ce que** le quatrième étage effectue une sélection entre les premier et second résultats d'intégration pour fournir la partie réelle du symbole de modulation, et une sélection entre les troisième et quatrième résultats d'intégration pour fournir la partie imaginaire du symbole de modulation.

**12.** Récepteur selon la revendication 10, **caractérisé en ce que** le quatrième étage effectue une moyenne entre les premier et second résultats d'intégration pour fournir la partie réelle du symbole de modulation, et une moyenne entre les troisième et quatrième résultats d'intégration pour fournir la partie imaginaire du symbole de modulation.

**13.** Récepteur selon la revendication 1, **caractérisé en ce que** le canal de réception est centré sur la fréquence centrale et que la largeur de la fenêtre temporelle est égale à une période de la seconde fréquence.

**14.** Récepteur selon la revendication 1, **caractérisé en ce que** le canal de réception est centré sur la fréquence centrale et que la largeur de la fenêtre temporelle est égale à une demi-période de la seconde fréquence.

**15.** Récepteur selon la revendication 13 ou 14, **caractérisé en ce que** le quatrième étage effectue une somme des premier et quatrième résultats d'intégration pour fournir la partie réelle du symbole de modulation, et qu'il effectue la différence des second et troisième résultats d'intégration pour fournir la partie imaginaire du symbole de modulation.

**16.** Récepteur selon la revendication 13 ou 14, **caractérisé en ce que** le quatrième étage est configurable en mode transparent.

**17.** Récepteur selon l'une des revendications précédentes, **caractérisé en ce que** la première fréquence, la seconde fréquence et la fréquence de récurrence de la fenêtre temporelle sont fournies par un synthétiseur de fréquences.

**Patentansprüche**

**1.** Empfänger für ein UWB-Pulssignal in einem Empfangskanal aus einer Mehrzahl von Kanälen, die um eine Zentralfrequenz herum verteilt sind, wobei der Empfänger umfasst:

- eine erste Stufe (420), umfassend einen ersten Quadraturmischer, der bei einer ersten Frequenz ($f_0$) gleich

der Zentralfrequenz arbeitet, der dazu ausgelegt ist, das Signal ins Basisband oder eine Zwischenfrequenz umzusetzen, wobei die erste Stufe einen Phasenkanal ($s_I$) und einen Quadraturkanal ($s_Q$) bereitstellt;
- eine zweite Stufe (430), umfassend einen zweiten Quadraturmischer (432) auf dem Phasenkanal und einen dritten Quadraturmischer (433) auf dem Quadraturkanal, wobei der zweite Mischer bei einer zweiten Frequenz ($f_1$) arbeitet und ein erstes Phasensignal und ein erstes Quadratursignal bereitstellt, wobei der dritte Mischer bei der zweiten Frequenz arbeitet und ein zweites Phasensignal und ein zweites Quadratursignal bereitstellt;
- eine dritte Stufe (440), die das erste Phasensignal und das erste Quadratursignal sowie das zweite Phasensignal und das zweite Quadratursignal über ein Zeitfenster integriert, um eine erstes, ein zweites, ein drittes beziehungsweise ein viertes Integrationsresultat zu liefern;

**dadurch gekennzeichnet, dass** er ferner eine vierte Stufe (450) umfasst, die das erste, das zweite, das dritte und das vierte Integrationsresultat mit Hilfe von Kombinationskoeffizienten kombiniert, um wenigstens einen Realteil und einen Imaginärteil eines Modulationssymbols zu liefern; und dass:

- die zweite Frequenz und die Kombinationskoeffizienten als Funktion des Empfangskanals steuerbar sind.

2. Empfänger nach Anspruch 1, **dadurch gekennzeichnet, dass** die erste Stufe ein erstes Filter auf dem Phasenkanal und ein zweites Filter auf dem Quadraturkanal mit identischen Eigenschaften umfasst, die als Funktion des Empfangskanals steuerbar sind.

3. Empfänger nach Anspruch 2, **dadurch gekennzeichnet, dass** der Empfangskanal auf die Zentralfrequenz zentriert ist, und dass die Eigenschaften des ersten und des zweiten Filters derart gesteuert sind, dass sie als Tiefpassfilter konfiguriert sind.

4. Empfänger nach Anspruch 2, **dadurch gekennzeichnet, dass** der Empfangskanal um einen Offset bezüglich der Zentralfrequenz versetzt ist, und dass die Eigenschaften des ersten und des zweiten Filters derart gesteuert sind, dass sie als Bandpassfilter konfiguriert sind.

5. Empfänger nach Anspruch 4, **dadurch gekennzeichnet, dass** die zweite Frequenz gleich dem Frequenzoffset gewählt ist.

6. Empfänger nach Anspruch 5, **dadurch gekennzeichnet, dass** die Kombinationskoeffizienten derart gewählt sind, dass eine Unterdrückung der Bildfrequenz des Empfangskanals bezüglich der Zentralfrequenz erfolgt.

7. Empfänger nach Anspruch 1, **dadurch gekennzeichnet, dass** die zweite Stufe derart konfigurierbar ist, dass sie im Transparentmodus arbeiten kann.

8. Empfänger nach Anspruch 7, **dadurch gekennzeichnet, dass** der Transparentmodus erzielt ist, indem man den zweiten und den dritten Mischer (432, 433) mittels Schaltern (435), die im Leitungsanschluss an diesen Letztgenannten montiert sind, shuntet.

9. Empfänger nach Anspruch 7, **dadurch gekennzeichnet, dass** der Transparentmodus erzielt ist, indem man die zweite Frequenz gleich Null wählt.

10. Empfänger nach Anspruch 7, **dadurch gekennzeichnet, dass** der Empfangskanal auf die Zentralfrequenz zentriert ist, und dass die zweite Stufe im Transparentmodus konfiguriert ist.

11. Empfänger nach Anspruch 10, **dadurch gekennzeichnet, dass** die vierte Stufe eine Auswahl zwischen dem ersten und dem zweiten Integrationsresultat durchführt, um den Realteil des Modulationssymbols zu liefern, und eine Auswahl zwischen dem dritten und dem vierten Integrationsresultat, um den Imaginärteil des Modulationssymbols zu liefern.

12. Empfänger nach Anspruch 10, **dadurch gekennzeichnet, dass** die vierte Stufe eine Mittelung durchführt zwischen dem ersten und dem zweiten Integrationsresultat, um den Realteil des Modulationssymbols zu liefern, und eine Mittelung zwischen dem dritten und dem vierten Integrationsresultat, um den Imaginärteil des Modulationssymbols zu liefern.

13. Empfänger nach Anspruch 1, **dadurch gekennzeichnet, dass** der Empfangskanal auf die Zentralfrequenz zentriert ist, und dass die Breite des Zeitfensters gleich einer Periode der zweiten Frequenz ist.

14. Empfänger nach Anspruch 1, **dadurch gekennzeichnet, dass** der Empfangskanal auf die Zentralfrequenz zentriert ist, und dass die Breite des Zeitfensters gleich einer Halbperiode der zweiten Frequenz ist.

15. Empfänger nach Anspruch 13 oder 14, **dadurch gekennzeichnet, dass** die vierte Stufe die Summe des ersten und des vierten Integrationsresultats bildet, um den Realteil des Modulationssymbols zu liefern, und dass sie die Differenz des zweiten und des dritten Integrationsresultats bildet, um den Imaginärteil des Modulationssymbols zu liefern.

16. Empfänger nach Anspruch 13 oder 14, **dadurch gekennzeichnet, dass** die vierte Stufe im Transparentmodus konfigurierbar ist.

17. Empfänger nach einem der vorhergehenden Ansprüche, **dadurch gekennzeichnet, dass** die erste Frequenz, die zweite Frequenz und die Wiederholungsfrequenz des Zeitfensters durch einen Frequenzsynthetisierer geliefert sind.

**Claims**

1. A pulsed UWB signal receiver in a receiving channel from a plurality of channels distributed about a center frequency, the receiver including:

   - a first stage (420), comprising a first quadrature mixer operating at a first frequency ($f_0$), intended to translate said signal into baseband or at an intermediate frequency, the first stage providing an in-phase channel ($s_I$) and a quadrature channel ($s_Q$);
   - a second stage (430), comprising a second quadrature mixer (432) on said in-phase channel and a third quadrature mixer (433) on said quadrature channel, the second mixer operating at a second frequency ($f_1$) and providing a first in-phase signal and a first quadrature signal, the third mixer operating at said second frequency and providing a second in-phase signal and a second quadrature signal;
   - a third stage (440) integrating said first in-phase and quadrature signals, as well as said second in-phase and quadrature signals, on a time window, to provide first, second, third and fourth integration results respectively;

   **characterized in that** it further includes a fourth stage (450) combining the first, second, third and fourth integration results by means of combination coefficients to provide at least a real part and an imaginary part of a modulation symbol; and **in that**:

   - the first frequency is equal to the center frequency;
   - the second frequency and combination coefficients are controllable as a function of the receiving channel.

2. The receiver according to claim 1, **characterized in that** the first stage comprises a first filter on the in-phase channel and a second filter on the quadrature channel, of identical characteristics, controllable as a function of the receiving channel.

3. The receiver according to claim 2, **characterized in that** when the receiving channel is centered on the center frequency, the characteristics of the first and second filters are controlled such that they are configured as low-pass filters.

4. The receiver according to claim 2, **characterized in that** when the receiving channel is offset with respect to the center frequency, the characteristics of the first and second filters are controlled such that they are configured as pass-band filters.

5. The receiver according to claim 4, **characterized in that** the second frequency is selected equal to the frequency offset.

6. The receiver according to claim 5, **characterized in that** the combination coefficients are selected so as to carry out a rejection of the image frequency of the receiving channel with respect to the center frequency.

7. The receiver according to claim 1, **characterized in that** the second stage is configurable to be able to operate in a transparent mode.

8. The receiver according to claim 7, **characterized in that** the transparent mode is obtained by shunting the second and third mixers (432, 433) by means of shunt switches (435) connected to the same.

9. The receiver according to claim 7, **characterized in that** the transparent mode is obtained by selecting the second frequency equal to zero.

10. The receiver according to claim 7, **characterized in that** the receiving channel is centered on the center frequency and **in that** the second stage is configured in a transparent mode.

11. The receiver according to claim 10, **characterized in that** the fourth stage carries out a selection between the first and second integration results to provide the real part of the modulation symbol, and a selection between the third and fourth integration results to provide the imaginary part of the modulation symbol.

12. The receiver according to claim 10, **characterized in that** the fourth stage works out an average between the first and second integration results to provide the real part of the modulation symbol, and an average between the third and fourth integration results to provide the imaginary part of the modulation symbol.

13. The receiver according to claim 1, **characterized in that** the receiving channel is centered on the center frequency and **in that** the width of the time window is equal to a period of the second frequency.

14. The receiver according to claim 1, **characterized in that** the receiving channel is centered on the center frequency and **in that** the width of the time window is equal to a half-period of the second frequency.

15. The receiver according to claim 13 or 14, **characterized in that** the fourth stage works out a sum of the first and fourth integration results to provide the real part of the modulation symbol, and **in that** it works out the difference of the second and third integration results to provide the imaginary part of the modulation symbol.

16. The receiver according to claim 13 or 14, **characterized in that** the fourth stage is configurable in a transparent mode.

17. The receiver according to one of the preceding claims, **characterized in that** the first frequency, the second frequency and the recurrence frequency of the time window are provided by a frequency synthesizer.

FIG. 1

FIG. 2

FIG. 3A

FIG. 3B

FIG. 4

FIG. 4A

EP 2 909 946 B1

FIG. 4B

EP 2 909 946 B1

FIG. 4C

EP 2 909 946 B1

FIG. 4D

FIG. 4E

EP 2 909 946 B1

FIG. 4F

EP 2 909 946 B1

FIG. 4G

FIG. 4H

EP 2 909 946 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1482648 A
- EP 1580901 A
- FR 1259861
- US 2007155348 A
- US 2011189970 A

**Littérature non-brevet citée dans la description**

- **F. BAUTISTA et al.** Low power beamforming RF architecture enabling fine ranging and AOA techniques. *Proc. of IEEE Int'l Conférence on Ultra-Wideband (ICUWB),* 14 Septembre 2011, 585-589
- **C-Y WU et al.** A 5 GHz CMOS double-quadrature receiver front-end with single stage quadrature generator. *IEEE Journal of Solid State Circuits,* 01 Mars 2004, vol. 39 (3), 519-521
- **B. NAUTA.** A CMOS transconductance-C filter technique for very high frequencies. *IEEE Journal of Solid States Circuits,* Février 1992, vol. 27 (2